# EUROPEAN PATENT SPECIFICATION

(11) **EP 4 322 598 B1**
(45) Date of publication and mention of the grant of the patent: **30.10.2024**
(21) Application number: 22190177.0
(22) Date of filing: 12.08.2022
(51) Int. Cl.: H04W 24/08, H04W 4/02, H04W 24/10, H04W 64/00

(54) **METHOD FOR CONDUCTING RADIOFREQUENCY SENSING INVOLVING AT LEAST A RADIOFREQUENCY SENSING STATION AS PART OF A MOBILE COMMUNICATION NETWORK, SYSTEM OR MOBILE COMMUNICATION NETWORK, RADIOFREQUENCY SENSING STATION, SENSING SERVICE NODE, PROGRAM AND COMPUTER-READABLE MEDIUM**
VERFAHREN ZUM DURCHFÜHREN VON FUNKFREQUENZERFASSUNG MIT MINDESTENS EINER FUNKFREQUENZERFASSUNGSSTATION ALS TEIL EINES MOBILKOMMUNIKATIONSNETZES, EINES SYSTEMS ODER EINES MOBILKOMMUNIKATIONSNETZES, EINER FUNKFREQUENZERFASSUNGSSTATION, EINES ERFASSUNGSDIENSTKNOTEN, EINES PROGRAMMS UND EINES COMPUTERLESBAREN MEDIUMS
PROCÉDÉ PERMETTANT D'EFFECTUER UNE DÉTECTION DE RADIOFRÉQUENCE COMPRENANT AU MOINS UNE STATION DE DÉTECTION DE RADIOFRÉQUENCE EN TANT QUE PARTIE D'UN RÉSEAU DE COMMUNICATION MOBILE, SYSTÈME OU RÉSEAU DE COMMUNICATION MOBILE, STATION DE DÉTECTION DE RADIOFRÉQUENCE, NOEUD DE SERVICE DE DÉTECTION, PROGRAMME ET SUPPORT LISIBLE PAR ORDINATEUR

(43) Date of publication of application: 14.02.2024
(73) Proprietor: Deutsche Telekom AG, 53113 Bonn (DE)
(72) Inventor: ALEKSIEV, Vasil, 2200 Wien (AT)
(74) Representative: Schwöbel, Thilo K.

(56) References cited:
- WO-A1-2011/137108
- WO-A1-2021/243627
- US-A1- 2021 385 625
- US-A1- 2023 188 389
- "3rd Generation Partnership Project; Technical Specification Group Services and System Aspects; Study on architecture enhancements to support Proximity-based Services (ProSe) (Release 12)", 3GPP STANDARD ; TECHNICAL REPORT ; 3GPP TR 23.703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 10 March 2014 (2014-03-10), pages 1 - 324, XP051293271
- "3rd Generation Partnership Project; Technical Specification Group Services and System Aspects; Proximity-based services (ProSe); Stage 2 (Release 17)", vol. SA WG2, no. V17.0.0, 23 December 2021 (2021-12-23), pages 1 - 130, XP052083257, Retrieved from the Internet <URL:https://ftp.3gpp.org/Specs/archive/23_series/23.303/23303-h00.zip 23303-h00.doc> [retrieved on 20211223]

## Description

### BACKGROUND

The present invention relates a method for conducting radiofrequency sensing involving at least a radiofrequency sensing station as part of a mobile communication network, wherein the radiofrequency sensing station is able to activate a radiofrequency sensing functionality and conduct radiofrequency sensing.

Additionally, the present invention relates to a system or a mobile communication network for conducting radiofrequency sensing involving at least a radiofrequency sensing station as part of the mobile communication network, wherein the radiofrequency sensing station is able to be operated such as to activate a radiofrequency sensing functionality and conduct radiofrequency sensing.

Furthermore, the present invention relates to a radiofrequency sensing station being or corresponding to a user equipment in an inventive system or in an inventive mobile communication network.

Furthermore, the present invention relates to a sensing service node in an inventive system or in an inventive mobile communication network, or as a part thereof.

Furthermore, the present invention relates to a program and to a computer-readable medium for conducting radiofrequency sensing.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies, which are typically organized throughout a country (or a part of or a region within a country) in a repeating pattern of (radio) cells (and associated base station entities) which belong to (or are used by or associated or assigned to) a mobile network operator (MNO).

By means of realizing sensing capabilities in such communication networks, primarily by means of one or a plurality of radiofrequency sensing stations generating and transmitting radiofrequency sensing signals and/or by means of such radiofrequency sensing stations receiving radiofrequency sensing reception signals, it is possible to obtain information regarding either transmission channel properties between different stations, e.g. between base station entities and/or between user equipments, and/or regarding objects from where such radiofrequency sensing signals are reflected.

Even though such sensing capabilities are able to procure further information regarding transmission channels and/or objects, especially moving objects, nearby or in the vicinity of the respective radiofrequency sensing stations, especially in case that user equipments operate (or are able to operate) as radiofrequency sensing stations, it should be assured that unauthorized use of network resources should be avoided as well as interferences reduced. If

Relevant disclosures in radiofrequency sensing are WO 2011/137108 A1, US 2021/385625 A1 and WO 2021/243627 A1.

### SUMMARY

The present invention is disclosed by the appended claims.

An object of the present invention is to provide a technically simple, effective and cost-effective solution for efficiently conducting radiofrequency sensing involving at least a radiofrequency sensing station as part of a mobile communication network. A further object of the present invention is to provide a corresponding system or mobile communication network, radiofrequency sensing station, sensing service node and a corresponding program and computer-readable medium.

The object of the present invention is achieved by a method for conducting radiofrequency sensing involving at least a radiofrequency sensing station as part of a mobile communication network, wherein the radiofrequency sensing station is able to activate a radiofrequency sensing functionality and conduct radiofrequency sensing
-- by means of transmitting a radiofrequency sensing signal and/or
-- by means of receiving a radiofrequency sensing reception signal,
wherein, in order to conduct the radiofrequency sensing and/or to activate the radiofrequency sensing functionality, the method comprises the following steps:
-- in a first step, the radiofrequency sensing station receives or generates or determines a sensing-related indication, wherein the sensing-related indication is related to or indicates whether the radiofrequency sensing station is allowed or authorized to conduct sensing or to activate the radiofrequency sensing functionality at its present or current location,
-- in a second step, the radiofrequency sensing station conducts sensing or activates the radiofrequency sensing functionality, or not, dependent on the sensing-related indication or its content.

It is thereby advantageously possible according to the present invention that radiofrequency sensing is not only able to be performed in a comparatively easy and straight-forward manner, but also that it is possible to control the use of radiofrequency sensing or the activation of the radiofrequency sensing functionality.

Especially, it is advantageously possible, according to the present invention, that the use or activation of the radiofrequency sensing functionality within or as part of user equipments is able to be controlled by mobile communication network (or its operator) based on the location of the radiofrequency sensing stations, i.e. based on the location of the user equipments. Especially, it is thereby advantageously possible, for the mobile communication network, to control the use of network resources and/or the potential generation of a higher level of interference due to radiofrequency sensing activity by user equipments, i.e. the potentially detrimental effects of conducting radiofrequency sensing (in a specific area or at a specific location) in terms or network performance is able to be controlled according to the present invention (e.g. due to conducting radiofrequency sensing requires the use (by user equipments and/or by the respective base station entities in the considered geographical area or location) of air interface resources, or radiofrequency resource blocks, that would otherwise be able to be used for (operational) communication purposes between the user equipments and/or the base station entity and/or due to conducting radiofrequency sensing might generate additional interference in the considered geographical area or location).

Hence, according to the present invention, in order to conduct radiofrequency sensing and/or to activate the radiofrequency sensing functionality (within a radiofrequency sensing station, especially a user equipment), the inventive method comprises that, in a first step, the radiofrequency sensing station receives or generates or determines a sensing-related indication, and, in a second step, that the radiofrequency sensing station conducts sensing or activates the radiofrequency sensing functionality, or not (i.e. deactivates the radiofrequency sensing functionality or refrains from conducting radiofrequency sensing), dependent on the sensing-related indication or its content.

According to the present invention, the sensing-related indication is related to or indicates whether the radiofrequency sensing station is allowed or authorized to conduct sensing or to activate the radiofrequency sensing functionality at its present or current location.

According to different embodiments of the present invention, the sensing-related indication might be different or carry a different information content.

According to a first group of embodiments according to the present invention, the radiofrequency sensing station has or receives a sensing-related location information, wherein the sensing-related location information indicates or is related to where or at which locations or areas the radiofrequency sensing station is allowed or authorized to conduct sensing, or not (i.e. the sensing-related location information indicates or is related to where or at which locations or areas the radiofrequency sensing station is not allowed or not authorized to conduct sensing), and, likewise in or during the first step, the radiofrequency sensing station receives or generates or determines a location information, wherein the location information indicates or is related to the present or current location or position of the radiofrequency sensing station,
and wherein it is the radiofrequency sensing station that determines, based on both the sensing-related location information and on the location information, the sensing-related indication being related to or indicating whether the radiofrequency sensing station is allowed or authorized to conduct sensing or to activate the radiofrequency sensing functionality at its present or current location, or not. Hence, according to this first group of embodiments, it is the entity or functionality sensing station that determines (or generates) the sensing-related information (based on the sensing-related location information and based on the location information that it itself is able to generate or that it receives (i.e. from the mobile communication network, e.g. from the serving base station entity).

According to different embodiments of the first group of embodiments according to the present invention, the sensing-related location information comprises at least one of the following:
-- an indication of a location-based specific sensing service configuration, indicating locations or geographical areas where sensing or the activation of the radiofrequency sensing functionality is restricted or interdicted and/or locations or geographical areas where sensing or the activation of the radiofrequency sensing functionality is authorized or allowed,
-- an indication of which networks, especially public land mobile networks, the radiofrequency sensing station is allowed or authorized to perform or conduct sensing or to activate the radiofrequency sensing functionality, wherein especially the sensing-related location information comprises a list of such networks,
-- an indication of a location-based specific sensing service configuration relating to out-of-coverage situations of the radiofrequency sensing station, indicating locations or geographical areas where sensing or the activation of the radiofrequency sensing functionality is restricted or interdicted in case of an out-of-coverage situation of the radiofrequency sensing station and/or locations or geographical areas where sensing or the activation of the radiofrequency sensing functionality is authorized or allowed.

According to a second group of embodiments according to the present invention, the radiofrequency sensing station receives the sensing-related indication (i.e. as opposed to the first group of embodiments according to the present invention, it is not the radiofrequency sensing station that determines, based on both the sensing-related location information and on the location information, the sensing-related indication, but the radiofrequency sensing station receives the sensing-related indication) by means of at least one of the following:
-- upon a request of the radiofrequency sensing station towards a sensing service node of or assigned with the mobile communication network (or an application server), wherein the sensing-related indication is transmitted, by the sensing service node and received by the radiofrequency sensing station, after the radiofrequency sensing station providing a location information, especially as part of the request, of the present or current location or position of the radiofrequency sensing station or after the mobile communication network determining the present or current location or position of the radiofrequency sensing station,
-- as an information element, especially as part of a system information block, especially transmitted or broadcast by a base station entity (in which case, the (exact) location of the radiofrequency sensing station would, especially, be of limited relevance as such an information element, especially as part of a system information block, would be able to be received on a rather limited geographical area (of the respective radio cell of the base station entity) anyway).

According to the present invention, it is advantageously possible and preferred that, in or during the first step, the radiofrequency sensing station has or receives a sensing-related location information, wherein the sensing-related location information indicates or is related to where or at which locations or areas the radiofrequency sensing station is allowed or authorized to conduct sensing, or not, and, likewise in or during the first step, the radiofrequency sensing station receives or generates or determines a location information, wherein the location information indicates or is related to the present or current location or position of the radiofrequency sensing station,
wherein the radiofrequency sensing station determines, based on both the sensing-related location information and on the location information, the sensing-related indication being related to or indicating whether the radiofrequency sensing station is allowed or authorized to conduct sensing or to activate the radiofrequency sensing functionality at its present or current location, or not.

Thereby, it is advantageously possible to implement the inventive method and system in an especially efficient manner.

According to the present invention, it is advantageously furthermore possible and preferred that the sensing-related location information comprises at least one of the following:
-- an indication of a location-based specific sensing service configuration, indicating locations or geographical areas where sensing or the activation of the radiofrequency sensing functionality is restricted or interdicted and/or locations or geographical areas where sensing or the activation of the radiofrequency sensing functionality is authorized or allowed,
-- an indication of which networks, especially public land mobile networks, the radiofrequency sensing station is allowed or authorized to perform or conduct sensing or to activate the radiofrequency sensing functionality, wherein especially the sensing-related location information comprises a list of such networks,
-- an indication of a location-based specific sensing service configuration relating to out-of-coverage situations of the radiofrequency sensing station, indicating locations or geographical areas where sensing or the activation of the radiofrequency sensing functionality is restricted or interdicted in case of an out-of-coverage situation of the radiofrequency sensing station and/or locations or geographical areas where sensing or the activation of the radiofrequency sensing functionality is authorized or allowed.

Thereby, it is advantageously possible to implement the inventive method and system in an especially efficient manner.

According to another embodiment of the present invention, it is furthermore advantageously possible and preferred that the radiofrequency sensing station receives the sensing-related indication by means of at least one of the following:
-- upon a request of the radiofrequency sensing station towards a sensing service node of or assigned with the mobile communication network, wherein the sensing-related indication is transmitted, by the sensing service node and received by the radiofrequency sensing station, after the radiofrequency sensing station providing a location information, especially as part of the request, of the present or current location or position of the radiofrequency sensing station or after the mobile communication network determining the present or current location or position of the radiofrequency sensing station,
-- as an information element as part of a system information block, especially broadcast by a base station entity.

Thereby, it is advantageously possible to implement the inventive method and system in an especially efficient manner.

Furthermore, it is advantageously possible and preferred according to the present invention that the sensing-related location information and/or the sensing-related indication comprises specific sensing service configuration information, especially an indication of the radio resources allowed to be used for sensing.

It is thereby advantageously possible according to the present invention for the mobile communication network to be able to have an even greater control, or a more fine-granular control, on the manner how the radiofrequency sensing is actually performed. Of course, it is possible according to the present invention that the specific sensing service configuration information is able to differ dependent on where the radiofrequency sensing is (to be) performed; i.e. in a first geographical area or a first location, a first set of sensing parameters might be able or required to be used and in a second geographical area or a second location, a second set of sensing parameters might be able or required to be used.

Furthermore, it is advantageously possible and preferred according to the present invention that the sensing-related location information is transmitted to the radiofrequency sensing station, and received by the radiofrequency sensing station, by means of at least one of the following:
-- an OTA, over-the-air, transport mechanism, the OTA transport mechanism especially being initiated by the mobile communication network,
-- by means of pre-configuration of the sensing-related location information in a memory location of or within the radiofrequency sensing station, especially within an universal integrated circuit card of the radiofrequency sensing station or within the mobile equipment of the radiofrequency sensing station.

Thereby, it is advantageously possible to implement the inventive method and system in an especially efficient manner.

According to a further preferred embodiment of the present invention the radiofrequency sensing station is or corresponds to a user equipment, wherein the mobile communication network especially corresponds to a home network of the user equipment, especially a public land mobile network or a non-public network.

Thereby, it is advantageously possible to implement the inventive method and system in an especially efficient manner.

Furthermore, the present invention relates to a system or mobile communication network for conducting radiofrequency sensing involving at least a radiofrequency sensing station as part of the mobile communication network, wherein the radiofrequency sensing station is able to be operated such as to activate a radiofrequency sensing functionality and conduct radiofrequency sensing
-- by means of transmitting a radiofrequency sensing signal and/or
-- by means of receiving a radiofrequency sensing reception signal,

wherein, in order to conduct the radiofrequency sensing and/or to activate the radiofrequency sensing functionality, the system or mobile communication network is configured such that:
   -- a sensing-related indication is transmitted to the radiofrequency sensing station, and received by the radiofrequency sensing station, or generated or determined by the radiofrequency sensing station, wherein the sensing-related indication is related to or indicates whether the radiofrequency sensing station is allowed or authorized to conduct sensing or to activate the radiofrequency sensing functionality at its present or current location, wherein sensing is conducted or the radiofrequency sensing functionality activated, or not, dependent on the sensing-related indication or its content,
wherein the mobile communication network especially corresponds to the a home network, especially a public land mobile network or a non-public network, of the radiofrequency sensing station or user equipment.

Furthermore, the present invention relates to a radiofrequency sensing station being or corresponding to a user equipment in a system or in a mobile communication network, or as a part thereof, according to the present invention.

Furthermore, the present invention relates to a sensing service node in a system or in a mobile communication network, or as a part thereof, according to the present invention.

Additionally, the present invention relates to a program comprising a computer readable program code which, when executed on a computer and/or on a radiofrequency sensing station and/or on a network node of a mobile communication network and/or on a sensing service node of the mobile communication network, or in part on a radiofrequency sensing station and/or in part on a network node of a mobile communication network and/or in part on a sensing service node, causes the computer and/or the radiofrequency sensing station and/or the network node of the mobile communication network and/or the sensing service node to perform the inventive method.

Still additionally, the present invention relates to a computer-readable medium comprising instructions which when executed on a computer and/or on a radiofrequency sensing station and/or on a network node of a mobile communication network and/or on a sensing service node of the mobile communication network, or in part on a radiofrequency sensing station and/or in part on a network node of a mobile communication network and/or in part on a sensing service node, causes the computer and/or the radiofrequency sensing station and/or the network node of the mobile communication network and/or the sensing service node to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

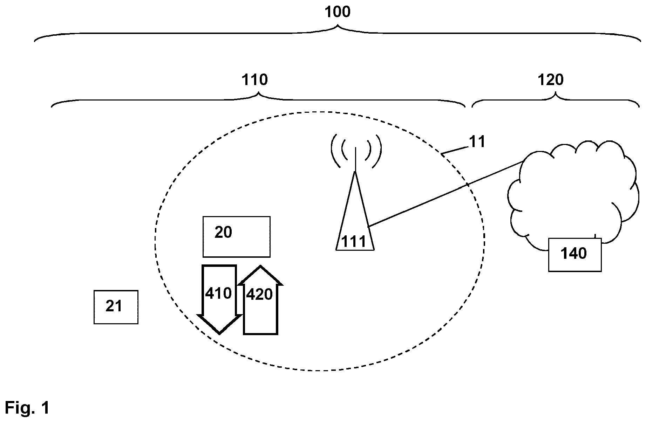

Figure 1 schematically illustrates a mobile communication network comprising or interworking with at least one radiofrequency sensing station that is able to activate a radiofrequency sensing functionality and is, hence, able to conduct radiofrequency sensing, wherein the radiofrequency sensing functionality, if activated, is conducted by means of transmitting a radiofrequency sensing signal and/or by means of receiving a radiofrequency sensing reception signal.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, schematically illustrates a mobile communication network 100 comprising or interworking with at least one radiofrequency sensing station 20 that is able to activate a radiofrequency sensing functionality and is, hence, able to conduct radiofrequency sensing, wherein the radiofrequency sensing functionality, if activated, is conducted by means of transmitting a radiofrequency sensing signal 410 and/or by means of receiving a radiofrequency sensing reception signal 420.

According to the present invention, it is preferred (but not mandatorily the case) that the radiofrequency sensing station 20 is or corresponds to a user equipment 20 within or connected to the mobile communication network 100, the user equipment 20 corresponding, e.g. to a smart phone device or a machine type communication device or to a specific sensing user equipment device. The mobile communication network 100, typically, comprises a radio access network 110 as well as a core network 120 (or, at least, the radio access network 110 and/or the core network 120 is assigned to the mobile communication network 100), and the radio access network 110 comprises at least one base station entity 111, such as, especially, a gNB-station, but typically the mobile communication network 100 comprises a plurality of such base station entities. The base station entity 111 has a radio coverage area (or radio cell) indicated by means of reference sign 11 and a dashed line in Figure 1. In the exemplary situation represented in Figure 1, the radiofrequency sensing station 20 (or the user equipment 20) is shown being located within radio cell 11, and another radiofrequency sensing station 21 (or other user equipment 21) is shown being located outside of radio cell 11, i.e. out of coverage with regard to base station entity 111. In the exemplary embodiment shown in Figure 1, the telecommunications network 100, especially the core network 120, comprises a sensing service node 140, especially being involved or being used to control the activation or deactivation of the sensing functionality of the radiofrequency sensing stations 20, 21, typically based on their respective location.

It might be the case that the radiofrequency sensing reception signal 420 is received, by the radiofrequency sensing station 20, as a result of the radiofrequency sensing signal 410 being transmitted by the same radiofrequency sensing station 20 (this situation is schematically hinted at by means of two arrows with reference signs 410 and 420, respectively); however, it might also be the case that the radiofrequency sensing reception signal 420 is received, by the radiofrequency sensing station 20, as a result of another radiofrequency sensing signal (not specifically shown in Figure 1) being transmitted by another radiofrequency sensing station 21 (schematically also shown in Figure 1, the other radiofrequency sensing station 21 being depicted not having radio coverage provided by the base station entity 111, i.e. outside of radio cell 11.

While it is possible that the radiofrequency sensing station 20 transmits the radiofrequency sensing signal 410 in a direction-dependent manner (e.g. by using active antenna technology, e.g. beamforming antennas, such as to achieve an angular resolution or variation of the transmission power with regard to the radiofrequency sensing signal 410), Figure 1 primarily shows, as one exemplary implementation, the rather classical transmission of the radiofrequency sensing signal 410 in various directions.

The radiofrequency sensing signal 410 might correspond to a direct transmission (or direct path-transmission) of the radiofrequency sensing signal 410 between different sensing stations 20, 21 but it could also correspond to a transmission of the radiofrequency sensing signal 410 towards or in the direction of another object (not shown in Figure 1) in the vicinity of the radiofrequency sensing stations 20, 21, e.g. a moving object such as a vehicle, a drone or the like. All those possibilities (of the radiofrequency sensing signal being transmitted between radiofrequency sensing stations 20, 21 and/or involving only one radiofrequency sensing station 20) might also (and will in many circumstances) be realized cumulatively, i.e. the radiofrequency sensing signal 410 is transmitted (e.g. by radiofrequency sensing station 20), and, as a consequence or result thereof, the radiofrequency sensing reception signal 420 is received by either the radiofrequency sensing station 20 or the further radiofrequency sensing station 21 (or vice versa) - however, for the sake of simplicity, this is not explicitly shown in Figure 1.

In the context of the present invention, the terms radiofrequency sensing signal 410 and radiofrequency sensing reception signal 420 are used in order to indicate that a (radiofrequency) signal (i.e. the radiofrequency sensing signal 410), once transmitted by the radiofrequency sensing station 20 (or transmitted by the other radiofrequency sensing station 21), is necessarily altered (such as distorted, attenuated, reflected or the like), and, hence, arrives (or is received) as an at least somehow or somewhat different (radiofrequency) signal (i.e. the radiofrequency sensing reception signal 420) at the reception side, i.e. either the same radiofrequency sensing station 20 (i.e. the one having transmitted the radiofrequency sensing signal) or the other radiofrequency sensing station 21. However, the radiofrequency sensing reception signal 420 is not inherently different from the radiofrequency sensing signal 410, but carries the signal modifications having occurred while being propagated between its transmission and its reception (by whichever radiofrequency sensing station 20, 21).

Thus, according to the present invention, the method for conducting radiofrequency sensing involves at least a radiofrequency sensing station 20 as part of a mobile communication network 100. The radiofrequency sensing station 20 (and as well the other radiofrequency sensing station) is able to activate a radiofrequency sensing functionality and conduct radiofrequency sensing by means of transmitting a radiofrequency sensing signal 410 and/or by means of receiving a radiofrequency sensing reception signal 420. In order to conduct such radiofrequency sensing and/or to activate the radiofrequency sensing functionality, the method comprises the steps of:
-- in a first step, the radiofrequency sensing station 20 receives or generates or determines a sensing-related indication, wherein the sensing-related indication is related to or indicates whether the radiofrequency sensing station 20 is allowed or authorized to conduct sensing or to activate the radiofrequency sensing functionality at its present or current location,
-- in a second step, the radiofrequency sensing station (20) conducts sensing or activates the radiofrequency sensing functionality, or not (i.e. it does not conduct sensing or it deactivates the radiofrequency sensing functionality), dependent on the sensing-related indication or its content.

According to the present invention, it is thereby advantageously possible to conduct (or to activate, or, rather, to deactivate) radiofrequency sensing (or a radiofrequency sensing functionality) based on the location of the radiofrequency sensing station 20, 21. Especially, thereby it is possible to implement a control of the mobile communication network (i.e. of the network operator thereof) to have a greater or even full control on the radiofrequency sensing behavior of radiofrequency sensing stations 20, 21, especially user equipments 20, 21. Especially, it is thereby advantageously possible to interdict user equipments 20, 21 to use network resources or spectrum without authorization (of the mobile communication network 100 or its network operator). From the point of view of a mobile network operator, it might be important to have possibilities to avoid unauthorized use of network resources (especially the use of radiofrequency spectrum, especially licensed spectrum, or radiofrequency air interface resources) and to reduce interference between user equipments and preserve enough resources for communication. Hence, it is advantageously possible, according to the present invention that - in a certain geographical area - certain radio resources are currently not occupied by communication and, hence, might successfully and beneficially be used for sensing purposes, while - in certain other parts of the network - there could be the expectation of a higher traffic load and, hence, sensing could be restricted; thereby, the protection of communication resources of the mobile communication network is possible to be realized.

According to the present invention, the mobile communication network 100 (or its operator) can control the network resources based on the location of the radiofrequency sensing stations 20, i.e. based on the location of the user equipments 20, 21, and can configure and re-configure user equipments 20, 21, e.g. via over-the-air mechanisms, OTA mechanisms. The user equipments 20, 21 are preferably preconfigured with a saved information, e.g. in user equipment memory. When switched on, the user equipment 20, 21 could, e.g., load or use a specific sensing configuration based on (its) location. According to the present invention, it is furthermore possible that sensing can also be used out of coverage (i.e. in case that a user equipment 21 is out of coverage regarding the mobile communication network 100) and respectively it is also possible that a user equipment 20, 21 (or radiofrequency sensing station 20, 21) is controlled without having network coverage.

According to preferred embodiments of the present invention, the home network of the user equipment 20, 21 (especially a home public land mobile network, HPLMN) pre-configures (e.g. by means of a configurations server or a sensing service function or sensing service node 140) the user equipment 20, 21 (as radiofrequency sensing station 20, 21) with an authorization information for a list of networks (or public land mobile networks, PLMNs) where the user equipment 20, 21 is authorized to perform radiofrequency sensing or to be part of the radiofrequency sensing service.

Especially, the home network (or HPLMN) pre-configures the user equipment 20, 21 with location based specific sensing service configuration as in some locations radiofrequency sensing is likely to be restricted while in others it is allowed.

Especially, the home network or HPLMN pre-configures the user equipment 20, 21 with "out of coverage" use of sensing based on location.

When the user equipment 20, 21 is switched on, or declares starting using radiofrequency sensing services (i.e. activates its radiofrequency sensing functionality in order to conduct radiofrequency sensing), it preferably determines its location via different possible ways (e.g. by means of a global navigation satellite system such as GPS and/or by means of the network location and/or the specific tracking area, TA, obtained via user equipment registration) and, based on this location, the user equipment 20, 21 loads specific configuration from user equipment memory (saved, e.g., in advance in the user equipment terminal (mobile equipment, ME) or in the UICC). If there is a lack of specific configuration for a specific location where the user equipment 20, 21 is, the user equipment 20, 21 might use default configuration for sensing service.

Furthermore especially, the home network or HPLMN might be able to re-configure these settings, e.g. due to a planned change of configurations regarding, e.g., all user equipments, e.g. via over-the-air mechanisms, OTA mechanisms.

When received by the user equipment 20, 21, such information (provided by the home network) are able to be saved in the user equipment's memory (ME, USIM) and used further when needed and whenever the user equipment 20, 21 is in this area. This also includes the use of specific radiofrequency signals to be used and/or the use of specific spectrum or specific radiofrequency air interface resources - i.e. which frequency band, how many user equipments 20, 21 can be part of such service and up to what distance, which specific measurements the user equipment 20, 21 can perform for sensing.

Alternatively, according to other embodiments of the present invention, the user equipment 20, 21 might first connect to the sensing service node 140 in order to receive configurations if and how to use the radiofrequency sensing service in the respective area where such radiofrequency sensing services are currently available. Such configuration or configuration information might be received via an application programming interface, API, or via non-access stratum, NAS, communication (alternatively to OTA mechanism), e.g. from the sensing service node 140 as a specific configuration server, and after the respective (considered) user equipment 20, 21 has contacted it. When the user equipment 20, 21 is switched on or when the user equipment 20, 21 declares starting using the radiofrequency sensing service, user equipment 20, 21 has to request from the network (configuration server or sensing service node 140) specific sensing service configuration and radio resources allowed to be used for radiofrequency sensing. The user equipment 20, 21 might either send its location, or the mobile communication network 100 might check the user equipment's location, and based on it send specific configuration for this area, i.e. the respective area where the considered respective user equipment 20, 21 is located. Such configuration server/sensing function (i.e. the sensing service node 140 or a sensing service entity or functionality) is able to be either a network function or an application function; however, such a transmission of configuration information requires the user equipment 20, 21 (at least at the point in time of this transmission) to have network coverage.

## Claims

1. Method for conducting radiofrequency sensing involving at least a radiofrequency sensing station (20) as part of a mobile communication network (100), wherein the radiofrequency sensing station (20) is able to activate a radiofrequency sensing functionality and conduct radiofrequency sensing
-- by means of transmitting a radiofrequency sensing signal (410), wherein the radiofrequency sensing signal (410) is transmitted by the radiofrequency sensing station (20) towards a further radiofrequency sensing station (21) or towards an object, and/or
-- by means of receiving a radiofrequency sensing reception signal (420),
wherein the radiofrequency sensing reception signal (420) is received by the radiofrequency sensing station (20) from a further radiofrequency sensing station (21) or from an object that reflects a radiofrequency sensing signal (410),
**characterized in that**, in order to conduct the radiofrequency sensing and/or to activate the radiofrequency sensing functionality, the method comprises the following steps:
-- in a first step, the radiofrequency sensing station (20) receives or generates or determines a sensing-related indication, wherein the sensing-related indication is related to or indicates whether the radiofrequency sensing station (20) is allowed or authorized to conduct sensing or to activate the radiofrequency sensing functionality at its present or current location, wherein, in or during the first step, the radiofrequency sensing station (20) has or receives a sensing-related location information, wherein the sensing-related location information indicates or is related to where or at which locations or areas the radiofrequency sensing station (20) is allowed or authorized to conduct sensing, or not, and, likewise in or during the first step, the radiofrequency sensing station (20) receives or generates or determines a location information, wherein the location information indicates or is related to the present or current location or position of the radiofrequency sensing station (20), wherein the radiofrequency sensing station (20) determines, based on both the sensing-related location information and on the location information, the sensing-related indication being related to or indicating whether the radiofrequency sensing station (20) is allowed or authorized to conduct sensing or to activate the radiofrequency sensing functionality at its present or current location, or not,
-- in a second step, the radiofrequency sensing station (20) conducts sensing or activates the radiofrequency sensing functionality, or not, dependent on the sensing-related indication or its content.

2. Method according to claim 1, wherein the sensing-related location information comprises at least one of the following:
-- an indication of a location-based specific sensing service configuration, indicating locations or geographical areas where sensing or the activation of the radiofrequency sensing functionality is restricted or interdicted and/or locations or geographical areas where sensing or the activation of the radiofrequency sensing functionality is authorized or allowed,
-- an indication of which networks, especially public land mobile networks, the radiofrequency sensing station (20) is allowed or authorized to perform or conduct sensing or to activate the radiofrequency sensing functionality, wherein especially the sensing-related location information comprises a list of such networks,
-- an indication of a location-based specific sensing service configuration relating to out-of-coverage situations of the radiofrequency sensing station (20), indicating locations or geographical areas where sensing or the activation of the radiofrequency sensing functionality is restricted or interdicted in case of an out-of-coverage situation of the radiofrequency sensing station (20) and/or locations or geographical areas where sensing or the activation of the radiofrequency sensing functionality is authorized or allowed.

3. Method according to one of the preceding claims, wherein the radiofrequency sensing station (20) receives the sensing-related indication by means of at least one of the following:
-- upon a request of the radiofrequency sensing station (20) towards a sensing service node (140) of or assigned with the mobile communication network (100), wherein the sensing-related indication is transmitted, by the sensing service node (140) and received by the radiofrequency sensing station (20), after the radiofrequency sensing station (20) providing a location information, especially as part of the request, of the present or current location or position of the radiofrequency sensing station (20) or after the mobile communication network (100) determining the present or current location or position of the radiofrequency sensing station (20),
-- as an information element, especially as part of a system information block, especially broadcast by a base station entity.

4. Method according to one of the preceding claims, wherein the sensing-related location information and/or the sensing-related indication comprises specific sensing service configuration information, especially an indication of the radio resources allowed to be used for sensing.

5. Method according to one of the preceding claims, wherein the sensing-related location information is transmitted to the radiofrequency sensing station (20), and received by the radiofrequency sensing station (20), by means of at least one of the following:
-- an OTA, over-the-air, transport mechanism, the OTA transport mechanism especially being initiated by the mobile communication network (100),
-- by means of pre-configuration of the sensing-related location information in a memory location of or within the radiofrequency sensing station (20), especially within an universal integrated circuit card of the radiofrequency sensing station (20).

6. Method according to one of the preceding claims, wherein the radiofrequency sensing station (20) is or corresponds to a user equipment (20), wherein the mobile communication network (100) especially corresponds to a home network of the user equipment (20), especially a public land mobile network or a non-public network.

7. System or mobile communication network (100) for conducting radiofrequency sensing involving at least a radiofrequency sensing station (20) as part of the mobile communication network (100), wherein the radiofrequency sensing station (20) is able to be operated such as to activate a radiofrequency sensing functionality and conduct radiofrequency sensing
-- by means of transmitting a radiofrequency sensing signal (410), wherein the radiofrequency sensing station (20) is configured to transmit the radiofrequency sensing signal (410) towards a further radiofrequency sensing station (21) or towards an object, and/or
-- by means of receiving a radiofrequency sensing reception signal (420), wherein the radiofrequency sensing station (20) is configured to receive the radiofrequency sensing reception signal (420) from a further radiofrequency sensing station (21) or from an object that reflects a radiofrequency sensing signal (410)
**characterized in that**, in order to conduct the radiofrequency sensing and/or to activate the radiofrequency sensing functionality, the system or mobile communication network (100) is configured such that:
-- a sensing-related indication is transmitted to the radiofrequency sensing station (20), and received by the radiofrequency sensing station (20), or generated or determined by the radiofrequency sensing station (20), wherein the sensing-related indication is related to or indicates whether the radiofrequency sensing station (20) is allowed or authorized to conduct sensing or to activate the radiofrequency sensing functionality at its present or current location, wherein sensing is conducted or the radiofrequency sensing functionality activated, or not, dependent on the sensing-related indication or its content, wherein the radiofrequency sensing station (20) has or receives a sensing-related location information, wherein the sensing-related location information indicates or is related to where or at which locations or areas the radiofrequency sensing station (20) is allowed or authorized to conduct sensing, or not, and the radiofrequency sensing station (20) receives or generates or determines a location information, wherein the location information indicates or is related to the present or current location or position of the radiofrequency sensing station (20), wherein the radiofrequency sensing station (20) determines, based on both the sensing-related location information and on the location information, the sensing-related indication being related to or indicating whether the radiofrequency sensing station (20) is allowed or authorized to conduct sensing or to activate the radiofrequency sensing functionality at its present or current location, or not,
wherein the mobile communication network (100) especially corresponds to the a home network, especially a public land mobile network or a non-public network, of the radiofrequency sensing station (20) or user equipment (20).

8. Radiofrequency sensing station (20) being or corresponding to a user equipment (20) in a system or in a mobile communication network, or as a part thereof, according to claim 7 or used in a method according to claims 1 to 6.

9. Sensing service node (140) in a system or in a mobile communication network, or as a part thereof, according to claim 7 or used in a method according to claims 1 to 6.

10. Program comprising a computer readable program code, which, when executed on a computer and/or on a radiofrequency sensing station (20) and/or on a network node of a mobile communication network (100) and/or on a sensing service node (140) of the mobile communication network (100), or in part on a radiofrequency sensing station (20) and/or in part on a network node of a mobile communication network (100) and/or in part on a sensing service node (140), causes the computer and/or the radiofrequency sensing station (20) and/or the network node of the mobile communication network (100) and/or the sensing service node (140) to perform a method according one of claims 1 to 6.

11. Computer-readable medium comprising instructions which when executed on a computer and/or on a radiofrequency sensing station (20) and/or on a network node of a mobile communication network (100) and/or on a sensing service node (140) of the mobile communication network (100), or in part on a radiofrequency sensing station (20) and/or in part on a network node of a mobile communication network (100) and/or in part on a sensing service node (140), causes the computer and/or the radiofrequency sensing station (20) and/or the network node of the mobile communication network (100) and/or the sensing service node (140) to perform a method according one of claims 1 to 6.

## Patentansprüche

1. Verfahren zum Durchführen einer Hochfrequenzerfassung unter Mitwirkung mindestens einer Hochfrequenzerfassungsstation (20) als Teil eines Mobilkommunikationsnetzes (100), wobei die Hochfrequenzerfassungsstation (20) in der Lage ist, eine Hochfrequenzerfassungsfunktionalität zu aktivieren und eine Hochfrequenzerfassung durchzuführen
- mittels Senden eines Hochfrequenzerfassungssignals (410), wobei das Hochfrequenzerfassungssignal (410) durch die Hochfrequenzerfassungsstation (20) zu einer weiteren Hochfrequenzerfassungsstation (21) oder zu einem Objekt gesendet wird, und/oder
- mittels Empfangen eines Hochfrequenzerfassungs-Empfangssignals (420), wobei das Hochfrequenzerfassungs-Empfangssignal (420) durch die Hochfrequenzerfassungsstation (20) von einer weiteren Hochfrequenzerfassungsstation (21) oder von einem Objekt, das ein Hochfrequenzerfassungssignal (410) reflektiert, empfangen wird,
**dadurch gekennzeichnet, dass** das Verfahren zum Durchführen der Hochfrequenzerfassung und/oder zum Aktivieren der Hochfrequenzerfassungsfunktionalität die folgenden Schritte umfasst:
- in einem ersten Schritt empfängt oder generiert oder bestimmt die Hochfrequenzerfassungsstation (20) einen erfassungsbezogenen Hinweis, wobei der erfassungsbezogene Hinweis sich darauf bezieht oder angibt, ob es der Hochfrequenzerfassungsstation (20) erlaubt ist oder ob sie autorisiert ist, an ihrem gegenwärtigen oder momentanen Standort eine Erfassung durchzuführen oder die Hochfrequenzerfassungsfunktionalität zu aktivieren, wobei in oder während dem ersten Schritt die Hochfrequenzerfassungsstation (20) eine erfassungsbezogene Standortinformation hat oder empfängt, wobei die erfassungsbezogene Standortinformation angibt oder sich darauf bezieht, wo oder an welchen Standorten oder in welchen Gebieten es der Hochfrequenzerfassungsstation (20) erlaubt ist oder sie autorisiert ist, eine Erfassung durchzuführen oder nicht, und gleichermaßen in oder während dem ersten Schritt empfängt oder generiert oder bestimmt die Hochfrequenzerfassungsstation (20) eine Standortinformation, wobei die Standortinformation den gegenwärtigen oder momentanen Standort oder die gegenwärtige oder momentane Position der Hochfrequenzerfassungsstation (20) angibt oder sich darauf bezieht, wobei die Hochfrequenzerfassungsstation (20) auf der Grundlage sowohl der erfassungsbezogenen Standortinformation als auch der Standortinformation den erfassungsbezogenen Hinweis bestimmt, der sich darauf bezieht oder angibt, ob es der Hochfrequenzerfassungsstation (20) erlaubt ist oder ob sie autorisiert ist, an ihrem gegenwärtigen oder momentanen Standort eine Erfassung durchzuführen oder die Hochfrequenzerfassungsfunktionalität zu aktivieren oder nicht,
- in einem zweiten Schritt führt die Hochfrequenzerfassungsstation (20) in Abhängigkeit von dem erfassungsbezogenen Hinweis oder seinem Inhalt eine Erfassung durch oder aktiviert die Hochfrequenzerfassungsfunktionalität oder nicht.

2. Verfahren nach Anspruch 1, wobei die erfassungsbezogene Standortinformation mindestens eines von Folgendem umfasst:
- einen Hinweis auf eine standortbezogene spezifische Erfassungsdienstkonfiguration, die Standorte oder geographische Gebiete angibt, wo eine Erfassung oder die Aktivierung der Hochfrequenzerfassungsfunktionalität eingeschränkt oder verboten ist, und/oder Standorte oder geographische Gebiete angibt, wo ein Erfassen oder die Aktivierung der Hochfrequenzerfassungsfunktionalität autorisiert oder erlaubt ist,
- einen Hinweis darauf, in welchen Netzen, insbesondere öffentlichen terrestrischen Mobilfunknetzen, es der Hochfrequenzerfassungsstation (20) erlaubt oder sie autorisiert ist, eine Erfassung durchzuführen oder vorzunehmen oder die Hochfrequenzerfassungsfunktionalität zu aktivieren, wobei insbesondere die erfassungsbezogene Standortinformation eine Liste solcher Netze umfasst,
- einen Hinweis auf eine standortbezogene spezifische Erfassungsdienstkonfiguration, die sich auf "Kein-Netz"-Situationen der Hochfrequenzerfassungsstation (20) bezieht und Standorte oder geografische Gebiete angibt, wo die Erfassung oder die Aktivierung der Hochfrequenzerfassungsfunktionalität im Fall einer "Kein-Netz"-Situation der Hochfrequenzerfassungsstation (20) eingeschränkt oder verboten ist, und/oder Standorte oder geografische Gebiete angibt, wo die Erfassung oder die Aktivierung der Hochfrequenzerfassungsfunktionalität autorisiert oder erlaubt ist.

3. Verfahren nach einem der vorangehenden Ansprüche, wobei die Hochfrequenzerfassungsstation (20) den erfassungsbezogenen Hinweis mittels mindestens einem von Folgendem erhält:
- auf Anforderung von der Hochfrequenzerfassungsstation (20) an einen Erfassungsdienstknoten (140), der zu dem Mobilkommunikationsnetz (100) gehört oder ihm zugewiesen ist, wobei der erfassungsbezogene Hinweis durch den Erfassungsdienstknoten (140) gesendet und durch die Hochfrequenzerfassungsstation (20) empfangen wird, nachdem die Hochfrequenzerfassungsstation (20) eine Standortinformation, insbesondere als Teil der Anforderung, über den gegenwärtigen oder momentanen Standort oder die gegenwärtige oder momentane Position der Hochfrequenzerfassungsstation (20) übermittelt hat oder nachdem das Mobilkommunikationsnetz (100) den gegenwärtigen oder momentanen Standort oder die gegenwärtige oder momentane Position der Hochfrequenzerfassungsstation (20) bestimmt hat,
- als ein Informationselement, insbesondere als Teil eines Systeminformationsblocks, der insbesondere durch eine Basisstationsentität gesendet wird.

4. Verfahren nach einem der vorangehenden Ansprüche, wobei die erfassungsbezogene Standortinformation und/oder der erfassungsbezogene Hinweis eine spezifische Erfassungsdienstkonfigurationsinformation umfasst, insbesondere einen Hinweis auf die Funkressourcen, die für die Erfassung verwendet werden dürfen.

5. Verfahren nach einem der vorangehenden Ansprüche, wobei die erfassungsbezogene Standortinformation mittels mindestens einem von Folgendem an die Hochfrequenzerfassungsstation (20) gesendet und durch die Hochfrequenzerfassungsstation (20) empfangen wird:
- einem OTA (over-the-air)-Transportmechanismus, wobei der OTA-Transportmechanismus insbesondere durch das Mobilkommunikationsnetz (100) initiiert wird,
- einer Vorkonfiguration der erfassungsbezogenen Standortinformation an einem Speicherplatz der, oder innerhalb der, Hochfrequenzerfassungsstation (20), insbesondere innerhalb einer universellen integrierten Schaltkreisplatine der Hochfrequenzerfassungsstation (20).

6. Verfahren nach einem der vorangehenden Ansprüche, wobei die Hochfrequenzerfassungsstation (20) eine Benutzerausrüstung (20) ist oder einer solchen entspricht, wobei das Mobilkommunikationsnetz (100) insbesondere einem Heimatnetz der Benutzerausrüstung (20), insbesondere einem öffentlichen terrestrischen Mobilfunknetz oder einem nicht-öffentlichen Netz, entspricht.

7. System oder Mobilkommunikationsnetz (100) zum Durchführen einer Hochfrequenzerfassung unter Mitwirkung mindestens einer Hochfrequenzerfassungsstation (20) als Teil des Mobilkommunikationsnetzes (100), wobei die Hochfrequenzerfassungsstation (20) so betrieben werden kann, dass sie eine Hochfrequenzerfassungsfunktionalität aktiviert und eine Hochfrequenzerfassung durchführt
- mittels Senden eines Hochfrequenzerfassungssignals (410), wobei die Hochfrequenzerfassungsstation (20) dafür eingerichtet ist, das Hochfrequenzerfassungssignal (410) zu einer weiteren Hochfrequenzerfassungsstation (21) oder zu einem Objekt zu senden, und/oder
- mittels Empfangen eines Hochfrequenzerfassungs-Empfangssignals (420), wobei die Hochfrequenzerfassungsstation (20) dafür eingerichtet ist, das Hochfrequenzerfassungs-Empfangssignal (420) von einer weiteren Hochfrequenzerfassungsstation (21) oder von einem Objekt, das ein Hochfrequenzerfassungssignal (410) reflektiert, zu empfangen,
**dadurch gekennzeichnet, dass** das System oder das Mobilkommunikationsnetz (100) zum Durchführen der Hochfrequenzerfassung und/oder zum Aktivieren der Hochfrequenzerfassungsfunktionalität so eingerichtet ist, dass:
- ein erfassungsbezogener Hinweis an die Hochfrequenzerfassungsstation (20) gesendet und durch die Hochfrequenzerfassungsstation (20) empfangen wird oder durch die Hochfrequenzerfassungsstation (20) generiert oder bestimmt wird, wobei der erfassungsbezogene Hinweis sich darauf bezieht oder angibt, ob es der Hochfrequenzerfassungsstation (20) erlaubt ist oder ob sie autorisiert ist, an ihrem gegenwärtigen oder momentanen Standort eine Erfassung durchzuführen oder die Hochfrequenzerfassungsfunktionalität zu aktivieren, wobei in Abhängigkeit von dem erfassungsbezogenen Hinweis oder seinem Inhalt eine Erfassung durchgeführt oder die Hochfrequenzerfassungsfunktionalität aktiviert wird oder nicht, wobei die Hochfrequenzerfassungsstation (20) eine erfassungsbezogene Standortinformation hat oder empfängt, wobei die erfassungsbezogene Standortinformation angibt oder sich darauf bezieht, wo oder an welchen Standorten oder in welchen Gebieten es der Hochfrequenzerfassungsstation (20) erlaubt ist oder sie autorisiert ist, eine Erfassung durchzuführen oder nicht, und die Hochfrequenzerfassungsstation (20) eine Standortinformation empfängt oder generiert oder bestimmt, wobei die Standortinformation den gegenwärtigen oder momentanen Standort oder die gegenwärtige oder momentane Position der Hochfrequenzerfassungsstation (20) angibt oder sich darauf bezieht, wobei die Hochfrequenzerfassungsstation (20) auf der Grundlage sowohl der erfassungsbezogenen Standortinformation als auch der Standortinformation den erfassungsbezogenen Hinweis bestimmt, der sich darauf bezieht oder angibt, ob es der Hochfrequenzerfassungsstation (20) erlaubt ist oder ob sie autorisiert ist, an ihrem gegenwärtigen oder momentanen Standort eine Erfassung durchzuführen oder die Hochfrequenzerfassungsfunktionalität zu aktivieren oder nicht, wobei das Mobilkommunikationsnetz (100) insbesondere einem Heimatnetz, insbesondere einem öffentlichen terrestrischen Mobilfunknetz oder einem nicht-öffentlichen Netz, der Hochfrequenzerfassungsstation (20) oder der Benutzerausrüstung (20) entspricht.

8. Hochfrequenzerfassungsstation (20), die eine Benutzerausrüstung (20) in einem System oder in einem Mobilkommunikationsnetz ist oder einer Benutzerausrüstung (20) in einem System oder in einem Mobilkommunikationsnetz entspricht oder ein Teil eines Systems oder eines Mobilkommunikationsnetzes ist, nach Anspruch 7, oder die in einem Verfahren nach einem der Ansprüche 1 bis 6 verwendet wird.

9. Erfassungsdienstknoten (140) in einem System oder in einem Mobilkommunikationsnetz oder als ein Teil eines System oder eines Mobilkommunikationsnetzes nach Anspruch 7 oder der in einem Verfahren nach einem der Ansprüche 1 bis 6 verwendet wird.

10. Programm, umfassend einen computerlesbaren Programmcode, der, wenn er auf einem Computer und/oder in einer Hochfrequenzerfassungsstation (20) und/oder in einem Netzknoten eines Mobilkommunikationsnetzes (100) und/oder in einem Erfassungsdienstknoten (140) des Mobilkommunikationsnetzes (100) oder teilweise in einer Hochfrequenzerfassungsstation (20) und/oder teilweise in einem Netzknoten eines Mobilkommunikationsnetzes (100) und/oder teilweise in einem Erfassungsdienstknoten (140) ausgeführt wird, den Computer und/oder die Hochfrequenzerfassungsstation (20) und/oder den Netzknoten des Mobilkommunikationsnetzes (100) und/oder den Erfassungsdienstknoten (140) veranlasst, ein Verfahren nach einem der Ansprüche 1 bis 6 durchzuführen.

11. Computerlesbares Medium, umfassend Instruktionen, die, wenn sie auf einem Computer und/oder in einer Hochfrequenzerfassungsstation (20) und/oder in einem Netzknoten eines Mobilkommunikationsnetzes (100) und/oder in einem Erfassungsdienstknoten (140) des Mobilkommunikationsnetzes (100) oder teilweise in einer Hochfrequenzerfassungsstation (20) und/oder teilweise in einem Netzknoten eines Mobilkommunikationsnetzes (100) und/oder teilweise in einem Erfassungsdienstknoten (140) ausgeführt werden, den Computer und/oder die Hochfrequenzerfassungsstation (20) und/oder den Netzknoten des Mobilkommunikationsnetzes (100) und/oder den Erfassungsdienstknoten (140) veranlassen, ein Verfahren nach einem der Ansprüche 1 bis 6 durchzuführen.

## Revendications

1. Procédé pour effectuer une détection radiofréquence impliquant au moins une station de détection radiofréquence (20) faisant partie d'un réseau de communication mobile (100), dans lequel la station de détection radiofréquence (20) peut activer une fonctionnalité de détection radiofréquence et effectuer une détection radiofréquence
- au moyen de la transmission d'un signal de détection radiofréquence (410), dans lequel le signal de détection radiofréquence (410) est transmis par la station de détection radiofréquence (20) vers une autre station de détection radiofréquence (21) ou vers un objet, et/ou
- au moyen de la réception d'un signal de réception de détection radiofréquence (420), dans lequel le signal de réception de détection radiofréquence (420) est reçu par la station de détection radiofréquence (20) à partir d'une autre station de détection radiofréquence (21) ou d'un objet qui réfléchit un signal de détection radiofréquence (410),
**caractérisé en ce que**, afin de réaliser la détection radiofréquence et/ou d'activer la fonctionnalité de détection radiofréquence, le procédé comprend les étapes suivantes :
- dans une première étape, la station de détection radiofréquence (20) reçoit ou génère ou détermine une indication liée à la détection, dans lequel l'indication liée à la détection est en rapport avec le fait de savoir ou indique si la station de détection radiofréquence (20) a la permission ou l'autorisation d'effectuer une détection ou d'activer la fonctionnalité de détection radiofréquence à son emplacement présent ou actuel, dans lequel, dans ou pendant la première étape, la station de détection radiofréquence (20) possède ou reçoit des informations d'emplacement liées à la détection, dans lequel les informations d'emplacement liées à la détection indiquent ou sont en rapport avec le fait de savoir où ou à quels emplacements ou dans quelles zones la station de détection radiofréquence (20) a la permission ou l'autorisation d'effectuer une détection, ou non, et, de même, dans ou pendant la première étape, la station de détection radiofréquence (20) reçoit ou génère ou détermine des informations d'emplacement, dans lequel les informations d'emplacement indiquent ou sont en rapport avec l'emplacement ou la position présents ou actuels de la station de détection radiofréquence (20), dans lequel la station de détection radiofréquence (20) détermine, sur la base à la fois des informations d'emplacement liées à la détection et des informations d'emplacement, que l'indication liée à la détection est en rapport avec le fait de savoir ou indique si la station de détection radiofréquence (20) a la permission ou l'autorisation d'effectuer une détection ou d'activer la fonctionnalité de détection radiofréquence à son emplacement présent ou actuel, ou non,
- dans une seconde étape, la station de détection radiofréquence (20) réalise une détection ou active la fonctionnalité de détection radiofréquence, ou non, en fonction de l'indication liée à la détection ou de son contenu.

2. Procédé selon la revendication 1, dans lequel les informations d'emplacement liées à la détection comprennent au moins l'un parmi :
- une indication d'une configuration de service de détection spécifique basée sur l'emplacement, indiquant des emplacements ou des zones géographiques où la détection ou l'activation de la fonctionnalité de détection radiofréquence est restreinte ou interdite et/ou des emplacements ou des zones géographiques où la détection ou l'activation de la fonctionnalité de détection radiofréquence est autorisée ou permise,
- une indication des réseaux, en particulier des réseaux mobiles terrestres publics, sur lesquels la station de détection radiofréquence (20) a la permission ou l'autorisation d'effectuer ou de réaliser une détection ou d'activer la fonctionnalité de détection radiofréquence, dans lequel en particulier les informations d'emplacement liées à la détection comprennent une liste de tels réseaux,
- une indication d'une configuration de service de détection spécifique basée sur l'emplacement relative à des situations hors couverture de la station de détection radiofréquence (20), indiquant des emplacements ou des zones géographiques où la détection ou l'activation de la fonctionnalité de détection radiofréquence est restreinte ou interdite dans le cas d'une situation hors couverture de la station de détection radiofréquence (20) et/ou des emplacements ou des zones géographiques où la détection ou l'activation de la fonctionnalité de détection radiofréquence est autorisée ou permise.

3. Procédé selon l'une des revendications précédentes, dans lequel la station de détection radiofréquence (20) reçoit l'indication liée à la détection au moyen d'au moins l'un parmi :
- sur demande de la station de détection radiofréquence (20) adressée à un noeud de service de détection (140) du réseau de communication mobile (100) ou associé à celui-ci, dans lequel l'indication liée à la détection est transmise, par le noeud de service de détection (140), et reçue par la station de détection radiofréquence (20), après que la station de détection radiofréquence (20) a fourni des informations d'emplacement, notamment dans le cadre de la demande, de l'emplacement ou de la position présents ou actuels de la station de détection radiofréquence (20) ou après la détermination par le réseau de communication mobile (100) de l'emplacement ou de la position présents ou actuels de la station de détection radiofréquence (20),
- comme élément d'information, notamment dans le cadre d'un bloc d'informations système, notamment diffusé par une entité station de base.

4. Procédé selon l'une des revendications précédentes, dans lequel les informations d'emplacement liées à la détection et/ou l'indication liée à la détection comprennent des informations de configuration de service de détection spécifiques, notamment une indication des ressources radio autorisées à être utilisées pour la détection.

5. Procédé selon l'une des revendications précédentes, dans lequel les informations d'emplacement liées à la détection sont transmises à la station de détection radiofréquence (20) et reçues par la station de détection radiofréquence (20) au moyen d'au moins l'un parmi :
- un mécanisme de transport hertzien, OTA, le mécanisme de transport OTA étant notamment initié par le réseau de communication mobile (100),
- au moyen d'une préconfiguration des informations d'emplacement liées à la détection dans un emplacement mémoire de ou au sein de la station de détection radiofréquence (20), notamment au sein d'une carte à circuit intégré universelle de la station de détection radiofréquence (20).

6. Procédé selon l'une des revendications précédentes, dans lequel la station de détection radiofréquence (20) est ou correspond à un équipement utilisateur (20), dans lequel le réseau de communication mobile (100) correspond notamment à un réseau domestique de l'équipement utilisateur (20), notamment un réseau mobile terrestre public ou un réseau non public.

7. Système ou réseau de communication mobile (100) pour réaliser une détection radiofréquence impliquant au moins une station de détection radiofréquence (20) faisant partie du réseau de communication mobile (100), dans lequel la station de détection radiofréquence (20) peut être mise en œuvre de manière à activer une fonctionnalité de détection radiofréquence et à réaliser une détection radiofréquence
- au moyen de la transmission d'un signal de détection radiofréquence (410), dans lequel la station de détection radiofréquence (20) est configurée pour transmettre le signal de détection radiofréquence (410) vers une autre station de détection radiofréquence (21) ou vers un objet, et/ou
- au moyen de la réception d'un signal de réception de détection radiofréquence (420), dans lequel la station de détection radiofréquence (20) est configurée pour recevoir le signal de réception de détection radiofréquence (420) à partir d'une autre station de détection radiofréquence (21) ou d'un objet qui réfléchit un signal de détection radiofréquence (410)
**caractérisé en ce que**, afin de réaliser la détection radiofréquence et/ou d'activer la fonctionnalité de détection radiofréquence, le système ou réseau de communication mobile (100) est configuré de telle sorte que :
- une indication liée à la détection est transmise à la station de détection radiofréquence (20), et reçue par la station de détection radiofréquence (20), ou générée ou déterminée par la station de détection radiofréquence (20), dans lequel l'indication liée à la détection est en rapport avec le fait de savoir ou indique si la station de détection radiofréquence (20) a la permission ou l'autorisation d'effectuer une détection ou d'activer la fonctionnalité de détection radiofréquence à son emplacement présent ou actuel, dans lequel la détection est réalisée ou la fonctionnalité de détection radiofréquence est activée, ou non, en fonction de la l'indication liée à la détection ou de son contenu, dans lequel la station de détection radiofréquence (20) possède ou reçoit des informations d'emplacement liées à la détection, dans lequel les informations d'emplacement liées à la détection indiquent ou sont en rapport avec le fait de savoir où ou à quels emplacements ou dans quelles zones la station de détection radiofréquence (20) a la permission ou l'autorisation de réaliser une détection, ou non, et la station de détection radiofréquence (20) reçoit ou génère ou détermine des informations d'emplacement, dans lequel les informations d'emplacement indiquent ou sont en rapport avec l'emplacement ou la position présents ou actuels de la station de détection radiofréquence (20), dans lequel la station de détection radiofréquence (20) détermine, sur la base à la fois des informations d'emplacement liées à la détection et des informations d'emplacement, que l'indication liée à la détection est en rapport avec le fait de savoir ou indique si la station de détection radiofréquence (20) a la permission ou l'autorisation d'effectuer une détection ou d'activer la fonctionnalité de détection radiofréquence à son emplacement présent ou actuel, ou non,
dans lequel le réseau de communication mobile (100) correspond notamment à un réseau domestique, notamment un réseau mobile terrestre public ou un réseau non public, de la station de détection radiofréquence (20) ou de l'équipement utilisateur (20).

8. Station de détection radiofréquence (20) qui est ou correspond à un équipement utilisateur (20) dans un système ou dans un réseau de communication mobile, ou en tant que partie de celui-ci, selon la revendication 7 ou utilisée dans un procédé selon les revendications 1 à 6.

9. Noeud de service de détection (140) dans un système ou dans un réseau de communication mobile, ou en tant que partie de celui-ci, selon la revendication 7 ou utilisé dans un procédé selon les revendications 1 à 6.

10. Programme comprenant un code de programme lisible par ordinateur qui, lorsqu'il est exécuté sur un ordinateur et/ou sur une station de détection radiofréquence (20) et/ou sur un noeud de réseau d'un réseau de communication mobile (100) et/ou sur un noeud de service de détection (140) du réseau de communication mobile (100), ou en partie sur une station de détection radiofréquence (20) et/ou en partie sur un noeud de réseau d'un réseau de communication mobile (100) et/ou en partie sur un noeud de service de détection (140), amène l'ordinateur et/ou la station de détection radiofréquence (20) et/ou le noeud de réseau du réseau de communication mobile (100) et/ou le noeud de service de détection (140) à mettre en œuvre un procédé selon l'une des revendications 1 à 6.

11. Support lisible par ordinateur comprenant des instructions qui, lorsqu'elles sont exécutées sur un ordinateur et/ou sur une station de détection radiofréquence (20) et/ou sur un noeud de réseau d'un réseau de communication mobile (100) et/ou sur un noeud de service de détection (140) du réseau de communication mobile (100), ou en partie sur une station de détection radiofréquence (20) et/ou en partie sur un noeud de réseau d'un réseau de communication mobile (100) et/ou en partie sur un noeud de service de détection (140), amènent l'ordinateur et/ou la station de détection radiofréquence (20) et/ou le noeud de réseau du réseau de communication mobile (100) et/ou le noeud de service de détection (140) à mettre en œuvre un procédé selon l'une des revendications 1 à 6.
